# EUROPEAN PATENT APPLICATION

(11) **EP 2 611 144 A1**
(43) Date of publication of application: **03.07.2013**
(21) Application number: 12195213.9
(22) Date of filing: 03.12.2012
(51) Int. Cl.: H04N 5/44, H04N 21/422, H04N 21/482

(54) **Remote control apparatus and method of controlling display apparatus using the same**

(30) Priority: 30.12.2011 KR 20110147508
(71) Applicant: Samsung Electronics Co., Ltd., Gyeonggi-do 443-742 (KR)
(72) Inventor: Suh, Ji-woo, Seoul (KR); Kwon, Yong-hwan, Gyeonggi-do (KR)
(74) Representative: Clark, David James

(57) **Abstract**

A remote control apparatus is provided. The remote control apparatus includes an input unit configured to include a plurality of touch regions, a control unit configured to generate a control command for selecting a channel of the display apparatus according to channel number information input through the plurality of touch regions, and a transmission unit configured to transmit the control command to the display apparatus, wherein the channel number information includes a plurality of element information and the plurality of touch regions receives the plurality of element information, respectively.

## Description

### BACKGROUND

### 1. Field

Apparatuses and methods consistent with exemplary embodiments relate to a remote control apparatus and a method of controlling a display apparatus using the same, and more particularly, to a remote control apparatus capable of remotely controlling an operation of a display apparatus and a method of controlling a display apparatus using the same.

### 2. Description of the Related Art

In recent years, the expansion of digital broadcasting signals has allowed electronic devices, such as televisions, to receive more channels and allowed users the option to select from a large variety of channels.

As compared to analog broadcasting in the related art, the digital broadcasting transmits broadcasting signals corresponding to a plurality of channels with one frequency bandwidth and thus the number of channels which are to be selected by the users is increased.

However, since three or four minor channels are present in one major channel of the digital broadcasting, many operations, in a remote controller, to select a channel are needed using an up/down button provided in the remote controller.

Therefore, there is a need for a method and an apparatus for selecting channels with more ease.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

According to an aspect of an exemplary embodiment there is provided a remote control apparatus and a method of controlling a display apparatus using the same which are capable of improving a user's convenience by receiving channel number information through a plurality of channel regions displayed on the remote control apparatus.

According to an aspect of an exemplary embodiment, there is provided a remote control apparatus which controls a display apparatus. The remote control apparatus may include: an input unit configured to include a plurality of touch regions; a control unit configured to generate a control command for selecting a channel tuned by the display apparatus according to channel number information input through the plurality of touch regions; and a transmission unit configured to transmit the control command to the display apparatus, wherein the channel number information includes a plurality of element information and the plurality of touch regions receives the plurality of element information, respectively.

The input unit may include a first touch region configured to receive channel number information for changing a major channel number tuned by the display apparatus and a second touch region configured to receive channel number information to change a minor channel number tuned by the display apparatus.

The first touch region and the second touch region may be separated by an additional touch panel.

The first touch region and the second touch region may be visually separated through graphic user interface (GUI) elements corresponding thereto, respectively.

The first touch region may be a touch region of a plurality of touch regions. For example, the first touch region may be located on the left side of the input unit based on a position of the screen of the display apparatus. The second touch region may be another touch region of the plurality of touch regions, located on the right side of the input unit based on the position of the screen of the display apparatus.

The control unit may generate the control command for changing a channel of the display apparatus according to a user's input which is input to each of the first touch region and the second touch region. It is noted that the user's input can be a touch input, such as one done with the user's hand. However, the user's input is not limited thereto and other forms of inputting a control command can be used such as through a stylus, pen, etc.

The control unit may control the transmission unit to transmit input information corresponding to the user's input which is input to each of the first touch region and the second touch region.

The control unit may generate the control command for changing a channel of the display apparatus according to a user's flick command which is input to each of the first touch region and the second touch region.

According to another aspect of an exemplary embodiment, there is provided a method of controlling a display apparatus using a remote control apparatus, the remote control apparatus including a plurality of touch regions. The method may include: generating a control command for selecting a channel of the display apparatus according to channel number information input through the plurality of touch regions; and transmitting the control command to the display apparatus, wherein the channel number information includes a plurality of element information and the plurality of touch regions receives the plurality of element information, respectively.

The plurality of touch regions may include a first touch region configured to receive channel number information for changing a major channel number of the display apparatus and a second touch region configured to receive channel number information for changing a minor channel number of the display apparatus.

The first touch region and the second touch region may be separated by an additional touch panel.

The first touch region and the second touch region may be visually separated through GUI elements.

The first touch region may be a touch region which is located on the left side of the input unit among the plurality of touch regions of the input unit based on a position of a screen of the display apparatus with respect to the input unit and the second touch region may be a touch region which is located on the right side of the input unit among the plurality of touch regions based on the position of the screen of the display apparatus with respect to the input unit.

The generating a control command may include generating the control command configured to change a channel of the display apparatus according to a user's input which is input to each of the first and second touch regions.

The generating a control command may include transmitting input information corresponding to the user's input which is input to each of the first touch region and the second touch region to the display apparatus.

The generating a control command may include generating the control command configured to change a channel of the display apparatus according to a user's flick command input to each of the first and second touch regions.

According to another aspect of various exemplary embodiments, channel number information may be received through a plurality of touch regions. Therefore, it is possible to select a channel more easily and simply.

According to the present invention there is provided an apparatus and method as set forth in the appended claims. Other features of the invention will be apparent from the dependent claims, and the description which follows.

### BRIEF DESCRIPTION OF THE DRAWING FIGURES

The above and/or other aspects will be more apparent by describing in detail exemplary embodiments, with reference to the accompanying drawings, in which:
FIG. 1 is a view illustrating a system for implementing a method of changing a channel according to an exemplary embodiment;
FIG. 2 is a block diagram illustrating a configuration of a remote control apparatus according to an exemplary embodiment;
FIGS. 3A to 3C are views illustrating a method of changing a channel according to an exemplary embodiment; and
FIGS. 4A to 4D are views illustrating a method of changing a channel according to another exemplary embodiment; and
FIG. 5 is a flowchart illustrating a method of controlling a display apparatus according to an exemplary embodiment.

### DETAILED DESCRIPTION OF THE EXEMPLARY EMBODIMENTS

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

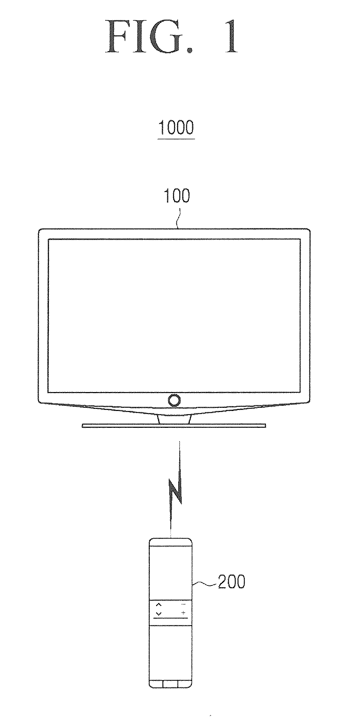

FIG. 1 is a view illustrating a system for implementing a method of changing a channel according to an exemplary embodiment. As shown in FIG. 1, a system 1000 according to an exemplary embodiment includes a display apparatus 100 and a remote control apparatus 200.

The display apparatus 100 may receive a broadcasting signal from a broadcasting station, a satellite, an external input apparatus or the like and output the received broadcasting signal. Here, the broadcasting station may include terrestrial broadcasting stations and cable broadcasting stations.

However, the display apparatus 100 is not limited thereto. The display apparatus 100 may receive content signals provided from various content providers through an Internet Protocol (IP) network and output the received content signal. In this case, the display apparatus 100 may allocate channel numbers according to content providers, content genres, and content titles and provide the allocated channel numbers.

The display apparatus 100 may perform an operation corresponding to a control command according to the control command received from the remote control apparatus 200. For example, when a channel tuning command is received from the remote control apparatus 200, the display apparatus 100 may tune to a channel corresponding to the channel tuning command and output a broadcasting signal received from the corresponding channel.

The display apparatus 100 may include a television (TV), a set-top box, a digital versatile disc (DVD) player, a mobile terminal, a desktop personal computer (PC), a laptop PC, and the like. However, the display apparatus 100 is not limited thereto, and any electronic apparatus configured to receive at least one of a broadcasting signal and a content signal and output the received signal may be the display apparatus 100.

The remote control apparatus 200 may transmit a control command corresponding to a user's operation to the display apparatus 100 and control an operation of the display apparatus 100. In particular, the remote control apparatus 200 may transmit a channel tuning command based on channel number information including a major channel number and a minor channel number to the display apparatus and control the display apparatus to tune a specific channel.

In general, although only one broadcasting channel is present in one channel frequency band (for example, 6 MHz) in an analog broadcasting, one broadcasting channel is divided into a plurality of sub channels in one channel frequency band. Therefore, the broadcasting channel can have a plurality of sub channels. Therefore, the major channel and the minor channel are included in the digital broadcasting to classify the sub channels.

For example, when a channel number is 6-1 in the digital broadcasting, the number "6" before "-" denotes a major channel number and the number "1" after "-" denotes a minor channel number. Thus, the major channels are fixed with unique numbers for each broadcasting station and the minor channels are allowed arbitrary numbers from 0 to 999 by the broadcasting stations themselves.

That is, the remote control apparatus 200 according to an exemplary embodiment may control channel tuning of the display apparatus 100 which outputs a broadcasting signal.

However, the channel tuning is not limited thereto and other forms of channel tuning can be used. The remote control apparatus 200 may control channel tuning even when the channel numbers are allocated to broadcasting signals provided through cable networks or content signals provided through IP networks in a similar manner to the broadcasting signals.

For example, one channel number may be allocated on the basis of a cable broadcasting station and another channel number may be allocated for contents provided from each cable broadcasting station. As another example, when one content provider provides a plurality of contents through the Internet, one channel number may be allocated on the basis of the content provider and another channel number may be allocated for contents provided from each content provider.

The remote control apparatus 200 according to an exemplary embodiment may be implemented with a remote controller configured to control the display apparatus 100. However, the remote control apparatus 200 is not limited thereto. For example, the remote control apparatus 200 may be implemented in a mobile terminal by executing an application serving as a remote controller function.

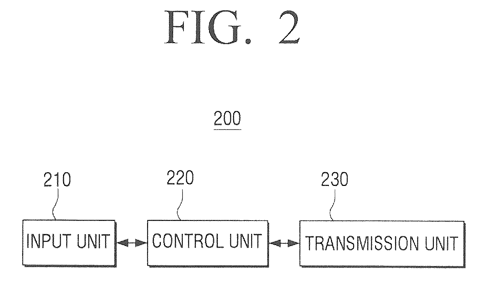

The specific configuration of the remote control apparatus 200 according to the exemplary embodiment will be described with reference to accompanying FIG. 2.

FIG. 2 is a block diagram illustrating a configuration of the remote control apparatus according to an exemplary embodiment. As shown in FIG. 2, the remote control apparatus 200 according to an exemplary embodiment includes an input unit 210, a control unit 220, and a transmission unit 230.

The input unit 210 includes a plurality of touch regions. The plurality of touch regions receive channel number information including a plurality of element information. That is, the plurality of touch regions may receive a plurality of elements information, respectively. For example, the plurality of touch regions may receive channel numbers having the different levels from each other, that is, the major channel number and the minor channel number, respectively.

Therefore, the input unit 210 may include a first touch region configured to receive channel number information for changing the major channel number of the display apparatus 100 and a second touch region configured to receive channel number information for changing the minor channel number of the display apparatus 100.

In this case, the first touch region and the second touch region may be separated through an additional touch panel (not shown). For example, a touch panel corresponding to the first touch region may be arranged in a lower portion of the remote control apparatus 200 and a touch panel corresponding to the second touch region may be arranged in an upper portion of the remote control apparatus 200. On the other hand, the touch panel corresponding to the first touch region may be arranged in the upper portion of the remote control apparatus 200 and the touch panel corresponding to the second touch region may be arranged in the lower portion of the remote control apparatus 200.

Alternatively, the first touch region and the second touch region may be visually separated through GUI elements corresponding thereto. That is, the first touch region and the second touch region may be visually classified and formed through GUIs indicated on one touch panel.

That is, the remote control apparatus 200 may be implemented with a mobile apparatus and when the remote control apparatus 200 drives an application serving as a remote controller (hereinafter, referred to as a remote application) for controlling the display apparatus 100, a GUI for the first touch region and a GUI for the second touch region may be classified and displayed in one touch panel provided in the remote control apparatus 200.

Here, any apparatus capable of autonomously driving an application such as personal digital assistants (PDAs) or portable multimedia players (PMPs) may be applied thereto with no limitation.

As described above, the input unit 210 may include a touch panel and may recognize touch input from a user's finger or a stylus pen and transmit touch information corresponding to the touch to the control unit 220 to be described later.

Here, the touch information may include information of various types of touch such tap, drag, or flick and information for a position in which the corresponding touch is generated. The tap corresponds to an operation for releasing touch of the panel without moving position after the touch is input to the touch panel by the user. The drag corresponds to an operation for moving a touch position from a first position to a second position at a speed below a preset critical rate after the user inputs touch to the touch panel. The flick corresponds to an operation for releasing touch of the panel after the user inputs touch to the touch panel and moves a touch position at a speed over the critical rate.

Further, the touch information may include information about a user's handwriting input. Here, the user's handwriting input may include various characters such as alphabet, Hangul, numbers, or symbols.

The touch panel performing the above functions may be implemented with a capacitive type, a resistive (pressure) type, a surface acoustic type, and an infrared type, however, it is noted that the implementation of the touch panel for performing the above functions is not limited thereto.

The plurality of touch regions of the input unit 210 may include a display unit (not shown) configured to display a menu icon for controlling an operation of the display apparatus 100. Here, the menu icon may include icons for receiving user commands such as power on/off, channel up/down, and volume up/down, etc.

That is, the plurality of touch regions of the input unit 210 has a layered structure with a touch panel so that a flat display device such as a liquid crystal display (LCD), an organic light emitting display (OLED) or an electrophoretic display (EPD) may receive a touch command and display the menu icon for controlling the display apparatus 100.

In addition, the input unit 210 may display a user command input through the plurality of touch regions through the display unit. For example, the input unit 210 may display an alphabet, Hangul, numbers, symbols or the like in the plurality of touch regions based on position information in which a user's touch is generated.

The input 210 may be implemented as a key button for controlling the display unit 100 in addition to the plurality of touch regions. That is, the input unit 210 may include various key buttons such as characters, or numbers for controlling the display apparatus to perform functions other than the menu icons indicated in the plurality of touch regions.

The control unit 220 controls an overall operation of the remote control apparatus 200. In particular, the control unit 220 may change a mode of the remote control apparatus 200 based on the user command input through the input unit 210 and control an operation thereof according to the mode.

Specifically, when the user touches a specific menu icon in a state in which the menu icon for controlling the display apparatus 100 is displayed, the control unit 220 may generate a control command corresponding to the touched menu icon. For example, when the user touches a power on icon, the control unit 220 may generate a control command for turning on the power of the display apparatus 100.

When a user command having a preset pattern is input to the plurality of touch regions provided in the input unit 210, the control unit 220 may convert a touch mode of the plurality of touch region into a mode (that is, a major-minor channel input mode) which receives a user command for tuning the major channel number and the minor channel number of the display apparatus 100. Here, the preset pattern may be a pattern which displays at least one of the first touch region and the second touch region. In the major-minor channel input mode, the menu icon may not be displayed in the first touch region and the second touch region.

Them, the control unit 220 generates a control command for selecting a channel of the display apparatus 100 according to channel number information input through the plurality of touch regions.

Specifically, the control unit 220 may generate the control command for changing a channel of the display apparatus 100 according to the user's input, such as the user's handwriting input which is input to each of the first touch region and the second touch region.

That is, the control unit 220 may determine a channel number corresponding to the handwriting input which is input through the first touch region and generate the control command for changing the major channel number of the display apparatus 100 to the determined channel number. The control unit 220 may determine a channel number corresponding to the handwriting input which is input through the second touch region and generate the control command for changing the minor channel number of the display apparatus 100 to the determined channel number.

Alternatively, the control unit 220 may generate the control command for changing a channel of the display apparatus 100 according to a user's flick command input to each of the first touch region and the second touch region.

That is, when the flick command is an upward or downward input which is input through the first touch region, the control unit may generate a control command for channel-up or channel-down of the major channel number currently tuned by the display apparatus 100. Similarly, when the flick command is an upward or downward input which is input through the second touch region, the control unit may generate a control command for channel-up or channel-down of the minor channel number currently tuned by the display apparatus 100.

Meanwhile, the input unit 210 may include additional buttons (or menu icon) for selecting whether the user's touch command, input to the first touch region and the second touch region, is recognized as a flick input or a handwriting input.

Thereby, the control unit 220 may generate a control command corresponding to the user command by determining whether the user command input to the first touch region and the second touch region system is a flick input or a handwriting input.

When a user command having a preset pattern is input to at least one of the plurality of touch regions provided in the input unit 210 again, the control unit 220 may convert the major-minor channel input mode into a mode in which a menu icon is displayed and display the menu icons in the plurality of touch regions again.

The transmission transmits a control command to the display apparatus. That is, the transmission unit 230 converts the control command output from the control unit 220 into a radio frequency (RF) transmission signal and transmits the converted signal to the display apparatus 100.

For example, when "7" is input through the first touch region input as the user's handwriting input, and "1" is input through the second touch region as the user's handwriting input, the control unit 220 determines the major channel number as "7" and the minor channel number as "1". Then, control unit 220 may control the transmission unit 230 to convert a channel tuning command including channel number information for "7-1" into a RF transmission signal and transmit the converted signal to the display apparatus 100.

Alternatively, when an "upward flick command" is input through the first touch region, the transmission 230 may transmit an RF transmission signal for channel up of the major channel number currently tuned by the display apparatus 100 based on the control command received from the control unit 220.

When a "downward flick command" is input through the second touch region, the transmission 230 may transmit an RF transmission signal for channel down of the minor channel number currently tuned by the display apparatus 100 based on the control command received from the control unit 220.

The control unit 220 may transmit control commands corresponding to menu icons provided in the plurality of touch regions of the input unit 210 and key buttons separately provided in the input unit 210 to the transmission unit 230. In this case, the transmission unit 230 may transmit the RF transmission signal, based on each control command, to the display apparatus 100 to control an operation of the display apparatus 100.

Meanwhile, the above-described exemplary embodiment illustrates that the remote control apparatus 200 generates the control command for controlling channel tuning of the display apparatus 100 and transmit the generated control command to the display apparatus 100, but the exemplary embodiment is only an example. That is, when the user command input from the remote control apparatus 200 is transmitted to the display apparatus 100, the remote control apparatus 200 may be implemented to tune a channel apparatus 100.

Specifically, the control unit 220 may control the transmission unit 230 to transmit input information, corresponding to a user's handwriting input which is input to each of the first touch region and the second touch region, to the display apparatus 100.

For example, when "7" is input through the first touch region as the user's handwriting input, and "1" is input to the second touch region as the user's handwriting input, the control unit 220 determines the major channel number as "7" and the minor channel number as "1". Then, control unit 220 may control the transmission unit 230 to convert the major channel number "7" and the minor channel number "1" into a predetermined code value corresponding thereto and sequentially transmit the converted code value to the display apparatus 100. The display apparatus 100 may determine the user command input to the remote control apparatus 200 based on the received code value and control an operation corresponding thereto. In the above-described example, the display apparatus 100 may tune a channel as "7-1" based on the received code value. Therefore, in the above-described exemplary embodiment, the remote control apparatus 200 may transmit a code value corresponding to a combination of the major channel number "7" and the minor channel number "1" to the display apparatus 100.

Similarly, even when a "flick input" is input to the first touch region and the second touch region, the remote control apparatus 200 may transmit code values corresponding to the "upward flick command" and the "downward flick command" to the display apparatus 100.

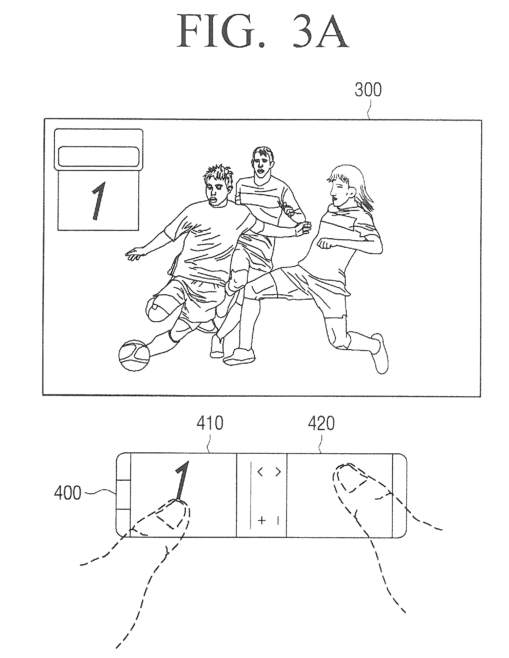

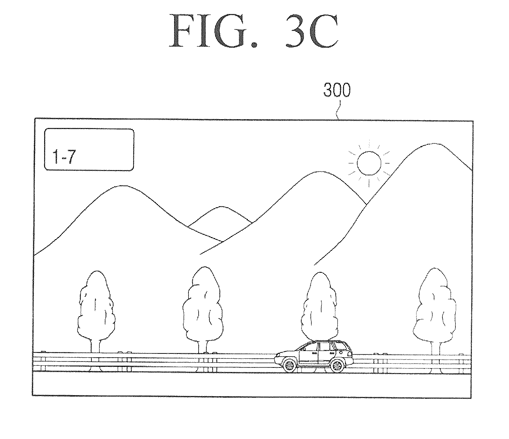

FIGS. 3A to 3C are views illustrating a method of changing a channel according to an exemplary embodiment. In particular, FIGS. 3A to 3C are views illustrating a case in which handwriting inputs are input to the first touch region and the second touch region of the input unit of the remote controller.

The first touch region may be in a touch region located on the left side of the input unit of the remote controller, with respect to the position of a screen of a display apparatus 300 among a plurality of touch regions and the second touch region may be a touch region located on the right side of the input unit of the remote controller, with respect to the position of the screen of the display apparatus 300 among the plurality of touch regions.

That is, as shown in FIGS. 3A to 3C, a region located on the left side of the input unit with respect to the position of the screen of the display apparatus 300 among the plurality of touch regions provided in the remote control apparatus 400 becomes a first touch region 410 for receiving the major channel number and a region located on the right side of the input unit of the remote control apparatus 400 with respect to the position of the display apparatus 300 becomes a second touch region 420 for receiving a minor channel number.

As described above, according to an exemplary embodiment, a function performed by each touch region of the remote control apparatus 400 may be determined on the basis of a tilted direction of the remote control apparatus 400. For this reason, the remote control apparatus 400 may include a sensing unit (not shown) for sensing the tilted direction of the remote control apparatus such as a two-axis acceleration sensor, a three-axis acceleration sensor, and a three-axis gyro sensor.

The control unit (220 of FIG. 220) may determine the first touch region and the second touch region among the plurality of touch regions based on a sensing result of the sensing unit (not shown) and generate a control command corresponding to each touch region.

For example, a case in which touch regions are included in an upper region and a lower region of the remote control apparatus 400, respectively and the remote control apparatus 400 is tilted leftward will be described.

In this case, the control unit (220 of FIG. 2) may determine a touch region located in the lower side region of the remote control apparatus 400 as the first touch region and generate a control command for tuning a channel number input through the corresponding touch region as the major channel number of the display apparatus 300. In addition, the control unit (220 of FIG. 2) may determine a touch region located in the upper side region of the remote control apparatus 400 as the second touch region and generate a control command for tuning a channel number input through the corresponding touch region as the minor channel number of the display apparatus 300.

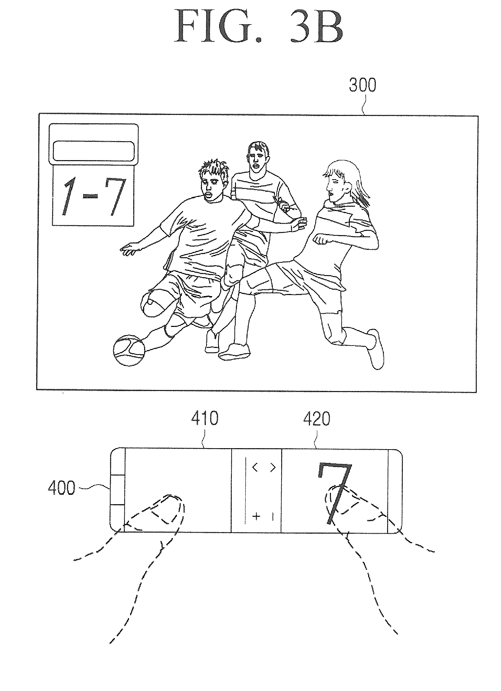

That is, as shown in FIGS. 3A and 3B, when "1" is input through the first touch region 410 and "7" is input through the second touch region 420, the remote control apparatus 400 transmits an RF transmission signal for selecting a channel corresponding to a channel number "1-7" to the display apparatus 300. In this case, the channel number input by the user may be displayed in the first touch region 410 and the second touch region 420.

The display apparatus 300 which receives the RF transmission signal for tuning a channel corresponding to the channel number "1-7" tunes the channel corresponding to the channel number "1-7" and outputs a digital broadcasting signal received from the corresponding channel.

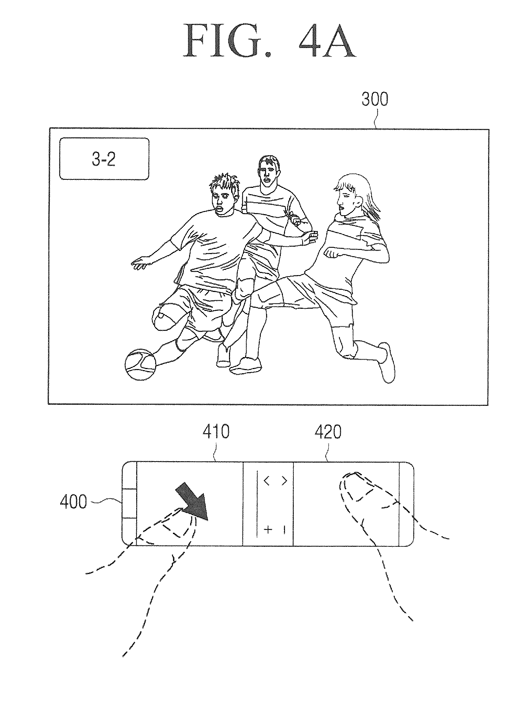

FIGS. 4A to 4D are views illustrating a method of changing a channel according to another exemplary embodiment. In particular, FIGS. 4A to 4D are views illustrating a case in which a flick command is input to a first touch region and a second touch region. The method of allocating the first touch region and the second touch region has been described in FIGS. 3A to 3C and thus their description and illustration will be omitted.

As shown in FIG. 4A, the display apparatus 300 has tuned a channel corresponding to a current channel number "3-2". At this time, when the "downward flick command" is input through the first touch region 410, the remote control apparatus 400 transmits an RF transmission signal for channel down of the major channel number to the display apparatus 300.

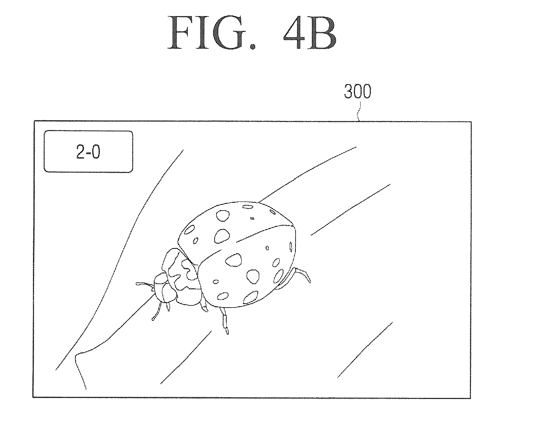

Thereby, as shown in FIG. 4B, the display apparatus 300 may tune a channel corresponding to a channel number "2-0" and output a digital broadcasting signal received from the corresponding channel. Here, since the smallest channel number among the minor channel numbers is set as a default value, the channel corresponding to the channel number "2-0" is tuned.

However, to tune the channel corresponding to the smallest channel number among the minor channel numbers is merely an example and a channel corresponding to the same minor channel number as the currently tuned minor channel number may be tuned. That is, when the "downward flick command" is input through the first touch region in the above-described exemplary embodiment, the display apparatus 300 may tune the channel not to a channel corresponding to the channel number "2-0" but to a channel corresponding to the channel number "2-2".

In addition, when the major channel number is changed, a minor channel number set as a default value for the changed major channel number may be set by the user.

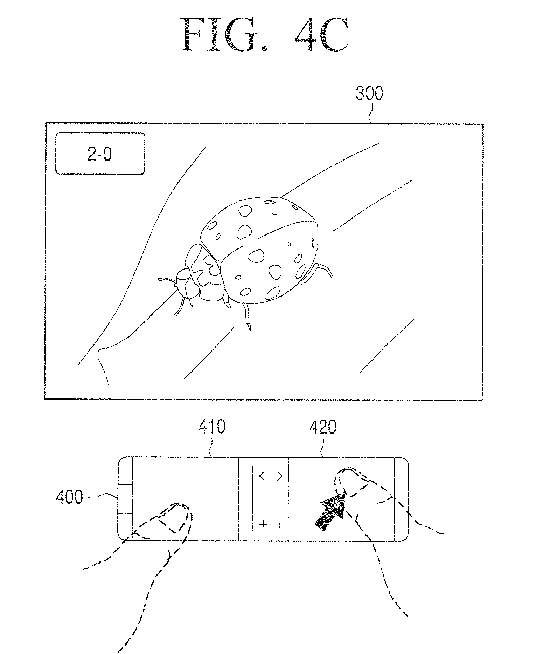

Then, as shown in FIG. 4C, when the "upward flick command" is input through the second touch region 420, the remote control apparatus 400 transmits an RF transmission signal for channel up of the minor channel number to the display apparatus 300.

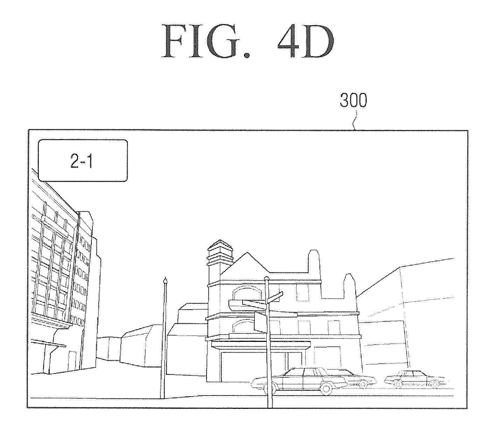

Thus, as shown in FIG. 4D, the display apparatus 300 may tune a channel corresponding to a channel number "2-1" and output a digital broadcasting signal received from the corresponding channel.

FIGS. 1 to 4D have described that the first channel region and the second channel region receive channel change commands based on channel number information including the major channel number and the minor channel number, respectively, but the above described exemplary embodiment is merely one example and the commands can be received through other forms.

That is, the first touch region and the second touch region may receive user commands for controlling different operations of the display apparatus. For example, the first touch region located on the left on the basis of the display apparatus may receive the user command for changing a channel of the display apparatus and the second touch region may receive the user command to change a volume of the display apparatus.

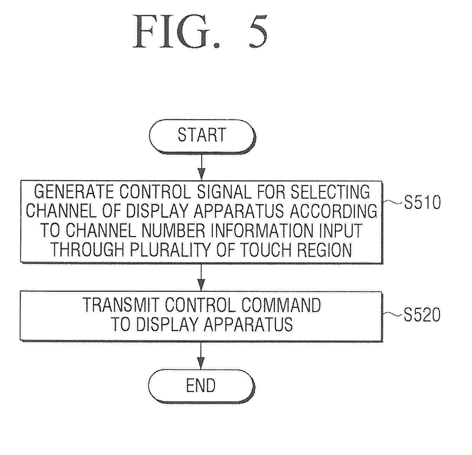

FIG. 5 is a flow chart illustrating a method of controlling a display apparatus according to an exemplary embodiment. In particular, the exemplary embodiment describes a method of controlling the display apparatus using the remote control apparatus including a plurality of touch regions.

First, a control command for selecting a channel of the display apparatus is generated according to channel number information input through the plurality of touch regions (S510).

Here, the channel number information may include a plurality of element information and the plurality of channel regions may receive the plurality of element information, respectively. For example, the plurality of touch regions may receive channel numbers having different levels, that is, the major channel number and the minor channel number, respectively.

Then, the control command is transmitted to the display apparatus (S520).

The plurality of touch regions may include a first touch region configured to receive channel number information for changing the major channel number of the display apparatus and a second touch region configured to receive channel number information for changing the minor channel number of the display apparatus.

The first touch region and the second touch region may be separated through additional touch panels. Alternatively, the first touch region and the second touch region may be visually separated through the GUI element.

The first touch region is a touch region located on the left side of the remote control with respect to the position of a screen of the display apparatus among the plurality of touch regions and the second touch region is a touch region located on the right side of the remote control with respect to the position of the screen of the display apparatus among the plurality of touch regions.

The above-described exemplary embodiment has been specifically described in FIGS. 1 to 4D and thus a repeated description and illustration may be omitted.

In step S510, a control command for changing a channel of the display apparatus may be generated according to a user's input which is input to each of the first touch region and the second touch region. As noted above, the user's input can be through a stylus, a pen or simply through the user's finger, but as also noted above, the user's input is not limited thereto and other input forms can be used.

Input information corresponding to the user' input which is input to each of the first touch region and the second touch region may be transmitted to the display apparatus.

A control command for changing a channel of the display apparatus according to a user's flick command input to each of the first touch region and the second touch region may be generated.

A program for executing the method according to the above-described various exemplary embodiments may be recorded in various types of recording media and used.

Specifically, a program code for executing the navigation method and the image processing method may be stored in various types of recording media readable by a terminal such as a random access memory (RAM), a flash memory, a read only memory (ROM), an erasable programmable ROM (EPROM), an electronically erasable and programmable ROM (EEPROM), a register, a hard disc, a removable disc, a memory card, a USB memory, a compact disc ROM (CD-ROM).

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote control apparatus which controls a display apparatus, the remote control apparatus comprising:
an input unit configured to include a plurality of touch regions;
a control unit configured to generate a control command for selecting a channel of the display apparatus according to channel number information input through the plurality of touch regions; and
a transmission unit configured to transmit the control command to the display apparatus,
wherein the channel number information includes a plurality of element information and the plurality of touch regions receives the plurality of element information, respectively.

2. The remote control apparatus as claimed in claim 1, wherein the input unit includes a first touch region configured to receive channel number information to change a major channel number of the display apparatus and a second touch region configured to receive channel number information to change a minor channel number, the minor channel number representing a sub-channel number of the major channel number, of the display apparatus.

3. The remote control apparatus as claimed in claim 2, wherein the first touch region and the second touch region are separated by a touch panel.

4. The remote control apparatus as claimed in claim 2 or 3, wherein the first touch region and the second touch region are visually separated through graphic user interface (GUI) elements corresponding thereto, respectively.

5. The remote control apparatus as claimed in anyone of claims 2 to 4, wherein the first touch region is a touch region of one of the plurality of touch regions, and is located on a left side of the remote control apparatus with respect to a screen of the display apparatus and the second touch region is a touch region of another one of the plurality of touch regions, and is located on the right side of the remote control apparatus with respect to the screen of the display apparatus.

6. The remote control apparatus as claimed in anyone of claims 2 to 5, wherein the control unit generates the control command for changing a channel of the display apparatus according to a user's handwriting input which is input to each of the first touch region and the second touch region.

7. The remote control apparatus as claimed in anyone of claims 2 to 6, wherein the control unit controls the transmission unit to transmit input information corresponding to a user's handwriting input which is input to each of the first touch region and the second touch region.

8. The remote control apparatus as claimed in anyone of claims 2 to 7, wherein the control unit generates the control command for changing a channel of the display apparatus according to a user's flick command input to each of the first touch region and the second touch region.

9. A method of controlling a display apparatus using a remote control apparatus including a plurality of touch regions, the method comprising:
generating a control command for selecting a channel of the display apparatus according to channel number information input through the plurality of touch regions; and
transmitting the control command to the display apparatus,
wherein the channel number information includes a plurality of element information and the plurality of touch regions receives the plurality of element information, respectively.

10. The method as claimed in claim 9, wherein the plurality of touch regions include a first touch region configured to receive the channel number information for changing a major channel number of the display apparatus and a second touch region configured to receive the channel number information for changing a minor channel number, the minor channel number representing a sub-channel number of the major channel number, of the display apparatus.

11. The method as claimed in claim 10, wherein the first touch region and the second touch region are separated by a touch panel.

12. The method as claimed in claim 10 or 11, wherein the first touch region and the second touch region are visually separated through graphic user interface (GUI) elements corresponding thereto, respectively.

13. The method as claimed in anyone of claims 10 to 12, wherein the first touch region is a touch region which is located on the left side of the remote control apparatus among the plurality of touch regions with respect to a screen of the display apparatus and the second touch region is a touch region which is located on the right side of the remote of the remote control apparatus among the plurality of touch regions with respect to the screen of the display apparatus.

14. The method as claimed in anyone of claims 10 to 13, wherein the generating the control command includes generating the control command configured to change a channel of the display apparatus according to a user's handwriting input which is input to each of the first touch region and the second touch region.

15. The method as claimed in anyone of claims 10 to 14, wherein the generating the control command includes transmitting input information corresponding to the user's handwriting input which is input to each of the first touch region and the second touch region to the display apparatus.
